# EUROPEAN PATENT SPECIFICATION

(11) **EP 2 091 723 B1**
(45) Date of publication and mention of the grant of the patent: **29.08.2012**
(21) Application number: 06832120.7
(22) Date of filing: 06.12.2006
(51) Int. Cl.: B29D 30/12, B29D 30/10, B29D 30/06

(54) **PROCESS AND APPARATUS FOR MANUFACTURING TYRES**
VERFAHREN UND VORRICHTUNG ZUR HERSTELLUNG VON REIFEN
PROCÉDÉ ET APPAREIL DE FABRICATION DE PNEUS

(43) Date of publication of application: 26.08.2009
(73) Proprietor: Pirelli Tyre S.p.A., 20126 Milano (IT)
(72) Inventor: MARCHINI, Maurizio, 20126 Milan (IT); MARIANI, Fiorenzo, 20126 Milan (IT); PIANTANIDA, Pier Giuseppe, 20126 Milan (IT)
(74) Representative: Tansini, Elio Fabrizio
(86) International application number: PCT/IB2006/054635
(87) International publication number: WO 2008/068551

(56) References cited:
- EP-A1- 0 119 753
- EP-A1- 0 976 532
- EP-A1- 1 457 309
- EP-A2- 1 215 024
- WO-A-2007/063560
- JP-A- 10 323 843
- US-A- 3 726 742
- US-A- 3 909 337

## Description

The present invention relates to a process and an apparatus for manufacturing tyres.

A tyre for vehicle wheels generally comprises a carcass structure including at least one carcass ply having respectively opposite end flaps in engagement with respective annular anchoring structures, integrated into the regions usually identified as "beads".

Associated with the carcass structure is a belt structure comprising one or more belt layers disposed in radial superposed relationship with respect to each other and to the carcass ply and having textile or metallic reinforcing cords with a crossed orientation and/or substantially parallel to the circumferential extension direction of the tyre. Applied to the belt structure at a radially external position is a tread band, which is also of elastomeric material like other semifinished products constituting the tyre.

Respective sidewalls of elastomeric material are also applied, at an axially external position, onto the side surfaces of the carcass structure, each extending from one of the side edges of the tread band until close to the respective annular anchoring structure to the beads. In tyres of the "tubeless" type, an airtight coating layer usually referred to as "liner" covers the inner surfaces of the tyre.

After building of the green tyre carried out through assembling of the respective components, a moulding and vulcanisation treatment is generally executed which aims at giving the tyre the appropriate structural stabilisation by cross-linking of the elastomeric compounds and imprinting of a desired tread pattern therein as well as of possible distinctive graphic marks at the tyre sidewalls.

Manufacturing processes of recent conception are known in which building of the green tyre is carried out through manufacture of the different components thereof on a toroidal support the conformation of which is coincident with the inner shaped of the finished tyre. For accomplishing the moulding and vulcanisation treatment, the green tyre is enclosed, together with the toroidal support on which the tyre itself has been built, in the moulding cavity of a vulcanisation mould conforming in shape to the outer configuration to be given to the finished tyre.

WO 2004/080701 in the name of the same Applicant proposes building of the tyre on a building support comprising a reinforced inflatable bladder that in an inflated condition substantially reproduces the inner configuration of the tyre to be obtained. When building has been completed, the building support carrying the green tyre is introduced into a vulcanisation mould where the building support is submitted to an over-inflation step to press the tyre against the inner walls of the mould.

The bladder has circumferential edges in engagement with respective anchoring flanges that are axially movable close to and away from each other. Combined with each of the anchoring flanges is a pressure ring to be positioned against an outer side surface of the inflatable bladder. Each pressure ring is divided into first and second sectors that are circumferentially distributed in an alternated sequence and elastically urged towards a work condition at which they have a substantially radial orientation to offer a continuous rest surface to the inner surface of the tyre close to a respective bead.

The first and second circumferential sectors are respectively in engagement with a first and a second hubs which are axially movable with respect to each other and can be positioned in an approached relationship with the respective anchoring flange, so as to enable circumferential interposition, in the work condition, of the second sectors between the first sectors.

To enable axial removal of the building support from the vulcanised tyre, the anchoring flanges are moved away from each other after deflation of the bladder and, by a containment ring fitted on the respective hubs axially spaced from each other, the circumferential sectors associated with one of the pressure rings are brought to and retained in a rest condition at which they are radially retracted to allow disengagement of the tyre from the building support.

US 5,853,526 discloses building of a tyre carried out through formation of the tyre components on an expandable toroidal support comprising a reinforced bladder the inner end flaps of which are sealingly fastened to mutually coaxial anchoring flanges integral with two half-shafts telescopically engaged with each other.

When building has been completed, the tyre is enclosed in the vulcanisation mould together with the expandable toroidal support. The bladder is adapted to receive steam or other working fluid under pressure, to cause pressing of the tyre against the inner surfaces of the moulding cavity and simultaneous supply of heat to the tyre itself for vulcanisation.

To enable the reinforced bladder when inflated to a predetermined pressure, to take and keep a predetermined geometric structure corresponding to the inner conformation of the tyre to be built, a pressure ring is associated with each of the flanges, said pressure ring laterally acting against a radially internal portion of the bladder itself.

Each pressure ring is formed with an assembly of first and second petal-shaped sectors circumferentially distributed in an alternated sequence to define in a work condition, a continuous reference surface for assembling the tyre. The sectors are mounted on pins and, being urged by springs, can rotate towards the axis of the toroidal support with the second sectors partly superposed with respect to the first sectors, so as to cause radial contraction of the pressure ring to enable removal of the expandable toroidal support from the tyre, after deflation of the bladder and shifting of the half-shafts apart from each other.

EP 1457309 discloses a method of building a tire carcass onto a toroidally expanded building drum core, wherein carcass components are applied onto a cover of the toroidally expanded building drum core while rigidly supporting the sides of the cover with a pair of internal side support mechanisms to form a toroidally shaped uncured carcass.

The drum core assembly includes a pair of annular axially movable end supports. Attached to the end supports is a pair of collapsible annular sidewall supports.

The sidewall supports include several hinged components that are attached by pins. Each of these hinged components is capable of pivotally moving relative to the adjacent hinged component. As the end supports are moved axially closer together the annular sidewall supports start to move radially outwardly.

The method may further include the step of curing the uncured tire assembly in a tire curing mold and removing the cured tire assembly from the mold, collapsing the toroidally expanded building drum core, and removing the tire from the collapsed core.

To remove the tire carcass from the drum assembly, one simply extends axially outward the two end supports. As the end supports move, the tire building drum and the cover are drawn radially inwardly as the end supports move axially outwardly.

It is the Applicant's opinion that, in order to ensure a satisfactory structural and geometric uniformity of the tyre, it would be better that at least in the bead region and, in case of need, also in at least one portion of the sidewalls, moulding of the type by an operation usually referred to as "imposed-volume moulding" be carried out, i.e. a moulding operation in which at least in the above mentioned regions the volume between the radially external surface of the toroidal support and the radially internal surface of the vulcanisation mould is filled by the material constituting the tyre in a substantial exact manner.

However, on noticing that difficulties can be encountered in obtaining a product that is structurally in agreement with the design specifications, the Applicant has seen that the proposed known art solutions make it difficult to manufacture pressure rings having an appropriate structural consistency so as to counteract the stresses transmitted to the tyre during closure of the vulcanisation mould to a degree sufficiently high for carrying out moulding of the "volume" type in the region of the beads.

In accordance with the Applicant's observations, in fact, in said known processes locking of the sectors forming the pressure rings, to the work condition substantially relies on the mutual mechanical interferences between the sectors themselves and/or on the thrust transmitted by the bladder in the inflated state, which can appear to be insufficient for obtaining an "imposed-volume" moulding. Therefore, in the above described processes the whole tyre, inclusive of the regions at the beads, in spite of the presence of the pressure rings, has a tendency to be actually submitted to a moulding of the so-called "imposed pressure" type, i.e. in which the force acting in a radially external direction from the radially external surface of the toroidal support to the radially internal surface of the vulcanisation mould, due to the moulding pressure of the working fluid, is substantially constant over the whole tyre.

In addition, separation of the sectors from the inner surfaces of the tyre at the end of the vulcanisation step is often difficult, and is likely to take place in an uneven manner thus transmitting undesirable asymmetric stresses to the tyre structure, as it is adversely affected by adhesion of the pressure rings to the inner tyre surfaces.

The Applicant has also noticed that the expandable toroidal supports of the above type, expressly conceived for building of the tyre directly thereon, have a great manufacture complexity and need sophisticated systems for control of the inflating pressure of the bladder in order to ensure the geometric and dimensional stability of same during the whole tyre building process. In addition, the reinforced bladder itself has a great manufacture complexity and is submitted to important thermal and mechanical stresses so that said bladder needs to be replaced after some vulcanisation cycles. The Applicant has also ascertained that the high number of expandable toroidal supports required for operation of a building plant under normal working conditions involves huge investments and high costs for management and servicing of the installations.

The Applicant has therefore conceived that it would be in some cases advantageous to get free from the necessity to manufacture the tyre on the same toroidal support as used during vulcanization of the tyre itself. On the contrary, the expandable toroidal supports of the above type do not lend themselves to be introduced into an already built green tyre without running the risk of the same being submitted to undesirable anomalous forces that will give rise to permanent stresses and/or structural deformations.

The Applicant has found that improvements in the quality of the final product and in terms of more operating flexibility are achieved by a process and an apparatus in which movement of the pressure rings between the rest condition and the work condition is operated irrespective of the bladder expansion and in a synchronised manner, so as to maintain a symmetry of the pressure rings themselves relative to an equatorial plane of the tyre under processing.

In particular, in accordance with a first aspect, the present invention relates to a process for manufacturing tyres for vehicle wheels as defined in claim 1, comprising the steps of: engaging a green tyre on an expandable toroidal support including a bladder having circumferential edges concentric to a geometric axis of the toroidal support and axially spaced apart from each other, and a pair of pressure rings operating at axially opposite positions on the expandable bladder and each comprising pressure sectors circumferentially distributed in an alternated sequence around said geometric axis; introducing the green tyre and the toroidal support into a vulcanisation mould; moulding and vulcanising the green tyre; removing the toroidal support from the tyre; wherein at least one of said engaging and removing steps comprises a movement step for shifting each pressure ring between a work condition at which the pressure sectors are circumferentially aligned with each other to define a substantially continuous abutment wall extending radially away from the geometric axis, and a rest condition at which the pressure sectors are moved close to the geometric axis to determine a radial contraction of the pressure ring, wherein the pressure rings are mutually constrained for simultaneously moving in a mutually symmetric manner during the movement step.

Movement control of the pressure sectors by mechanical constraints eliminates mechanical interferences and/or the requirement of transmitting stresses between one pressure sector and the other during their movement, for the benefit of reliability and durability of the mechanical parts.

In addition, the possibility of managing movement of the pressure sectors irrespective of the expansion condition of the bladder allows engagement and/or disengagement of the expandable toroidal support with and from the tyre to be carried out by advancing or delaying movement of the pressure sectors to a more or less important degree depending on requirements, relative to expansion or contraction of the bladder.

It is advantageously possible to build the tyre on a rigid toroidal building support externally having a forming surface with a conformation corresponding to the inner conformation of the built green tyre, and to subsequently remove the building support from the tyre to carry out engagement of same on the expandable toroidal support.

In fact, by carrying out building of the tyre on a rigid toroidal support, a great structural and dimensional accuracy is ensured to the built tyre without being obliged to resort to sophisticated expedients as required for manufacturing the reinforced bladders of the known art and for controlling the geometric and dimensional features of same through a constant management of the inflating pressure.

In a plant made in compliance with the above requirements there is a need for a reduced number of expandable toroidal supports, just the number strictly required for supporting the tyres submitted to the moulding and vulcanisation treatment, since the tyres on the building line are supported by rigid toroidal building supports.

Advantageously and in addition, the expandable toroidal support can be submitted to lubricating treatments aiming at increasing surface smoothness between the bladder and inner tyre surfaces. The possibility of carrying out these treatments directly on the expandable toroidal support outside the vulcanisation mould instead of carrying them out on the inner surfaces of the tyre or at the inside of the vulcanisation mould, greatly reduces the risks of the tyre and/or the mould being contaminated by the lubricating materials employed in carrying out the treatment.

In particular, engagement of the tyre to the expandable toroidal support preferably comprises the steps of: introducing the toroidal support coaxially into the tyre; carrying out said movement step for shifting the pressure rings to the work condition; expanding the bladder towards a work condition at which it substantially conforms in shape to the inner configuration of the tyre, starting from a rest condition at which said bladder is radially contracted with respect to the work condition.
Advantageously, movement of the pressure rings to the work condition can start before expansion of the bladder, so that engagement of the green tyre is carried out in a precise and controlled manner by the pressure rings. By so doing, when the bladder during the expansion step comes into contact with the inner surfaces of the green tyre, the later is advantageously already retained by the pressure rings in a conveniently centred position relative to the expandable toroidal support. Thus the risk of the bladder submitting the green tyre to anomalous forces that will bring about risks of deformations, damages and/or generation of anomalous stresses to the tyre structure, is eliminated.

According to a different aspect, the invention relates to a process for manufacturing tyres for vehicle wheels as defined in claim 14, comprising the steps of: building a green tyre on an expandable toroidal support comprising a bladder having circumferential edges concentric to a geometric axis of the toroidal support and axially spaced apart from each other, and a pair of pressure rings operating at axially opposite positions on the expandable bladder and each comprising pressure sectors circumferentially distributed in an alternated sequence around said geometric axis; introducing the green tyre and toroidal support into a vulcanisation mould; moulding and vulcanising the green tyre; removing the toroidal support from the tyre; wherein said removing step comprises a movement step to shift each pressure ring between a work condition at which the pressure sectors are circumferentially aligned with each other to define a substantially continuous abutment wall extending radially away from the geometric axis, and a rest condition at which the pressure sectors are disposed close to the geometric axis to determine a radial contraction of the pressure ring;
wherein the pressure rings are mutually constrained for simultaneous movement in a mutually symmetric manner during the movement step.

According to a further aspect, the invention relates to an expandable toroidal support as defined in claim 16, comprising a bladder having circumferential edges concentric to a geometric axis of the toroidal support and axially spaced apart from each other and a pair of pressure rings operating at axially opposite positions on the bladder and each comprising pressure sectors circumferentially distributed around said geometric axis; wherein said toroidal support further comprises: driving devices operating on the pressure rings to selectively translate them between a work condition at which the pressure sectors of each pressure ring are circumferentially in alignment with each other to define a substantially continuous abutment wall extending radially away from the geometric axis, and a rest condition at which the pressure sectors are moved close to the geometric axis to determine a radial contraction of the pressure ring; kinematic synchronisation members being operatively associated with the driving devices to cause the pressure rings to be mechanically mutually constrained so as to impose a simultaneous and mutually symmetric movement on them between a rest condition and a work condition.

According to another aspect, the invention relates to an apparatus for manufacturing tyres as defined in claim 23, comprising: at least one expandable toroidal supports comprising an expandable bladder having circumferential edges concentric to a geometric axis of the expandable toroidal support and axially spaced apart from each other, and a pair of pressure rings operating at axially opposite positions on the expandable bladder and each comprising pressure sectors circumferentially distributed around said geometric axis; devices for engaging the green tyre on said at least one expandable toroidal support; devices for introducing the green tyre and the expandable toroidal support into a vulcanisation mould; devices for moulding and vulcanising the green tyre; devices for removing the expandable toroidal support from the tyre; wherein said expandable toroidal support further comprises: driving devices operating on the pressure rings to selectively translate them between a work condition at which the pressure sectors of each pressure ring are circumferentially aligned with each other to define a substantially continuous abutment wall extending radially away from the geometric axis and a rest condition at which the pressure sectors are moved close to the geometric axis to determine a radial contraction of the pressure ring; kinematic synchronisation members being operatively associated with the driving devices to cause the pressure rings to be mechanically mutually constrained so as to impose a simultaneous and mutually symmetric movement on them between the rest condition and work condition.

Preferred embodiments of the invention are defined in the dependent claims.

Further features and advantages will become more apparent from the description of a preferred but not exclusive embodiment of a process and an apparatus for manufacturing tyres in accordance with the present invention. This description will be set out hereinafter with reference to the accompanying drawings, given by way of non-limiting example, in which:
- Fig. 1 is a diagrammatic top view of an apparatus for manufacturing tyres in accordance with the present invention;
- Fig. 2 is a diametrical section view of a tyre disposed on a rigid toroidal support, at the end of the building cycle of the tyre itself:
- Fig. 3 shows a step of introducing an expandable toroidal support into the green tyre previously disengaged from the rigid toroidal support;
- Fig. 4 shows the expandable toroidal support in a work condition inside the green tyre;
- Fig. 5 shows the tyre enclosed in a vulcanisation mould together with the expandable toroidal support;
- Fig. 6 is a perspective view of the expendable toroidal support in a rest condition;
   Fig. 7 is a perspective view of the expandable toroidal support in a work condition;

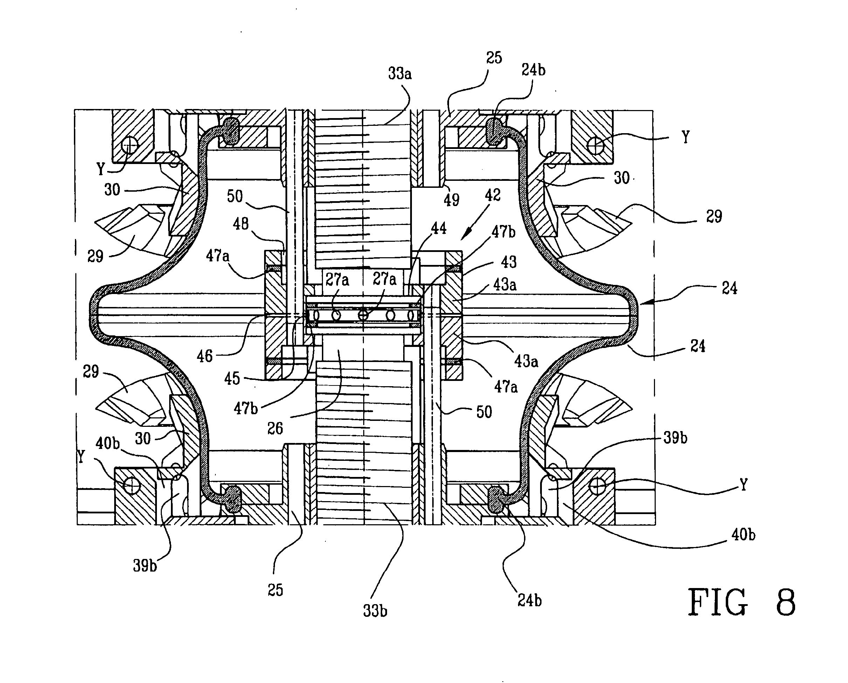

- Fig. 8 shows a detail seen in Fig. 3 to an enlarged scale;

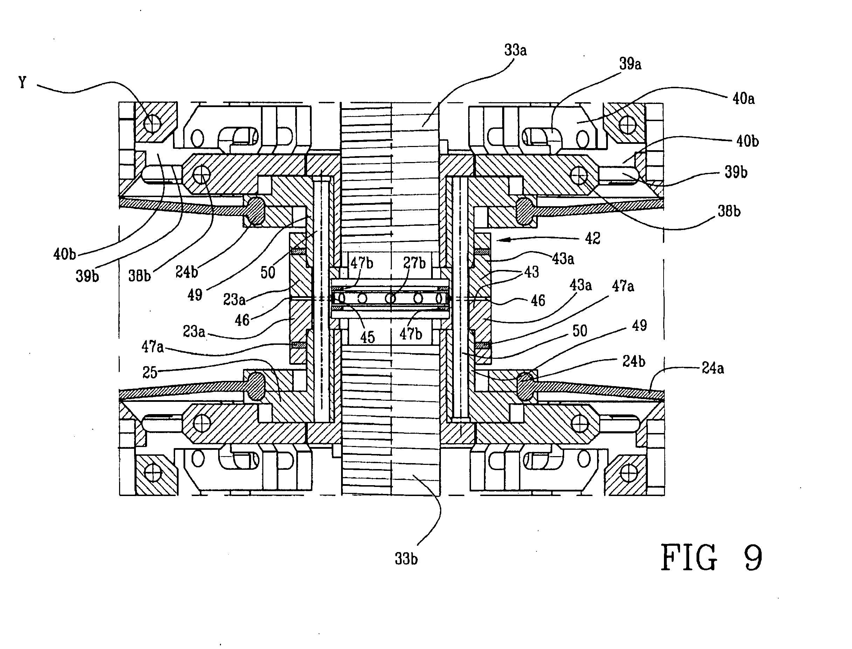

- Fig. 9 shows a detail seen in Fig. 4 to an enlarged scale;

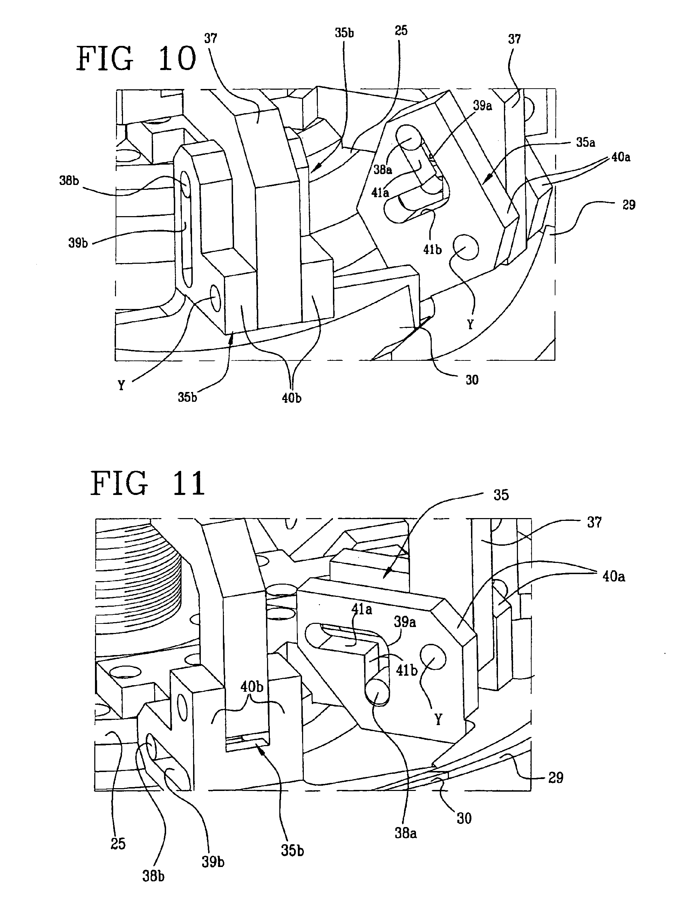

- Fig. 10 shows a detail seen in Fig. 6 to an enlarged scale;
- Fig. 11 shows a detail seen in Fig. 7 to an enlarged scale.

With reference to the drawings, an apparatus for manufacturing tyres in accordance with the present invention has been generally denoted with 1.

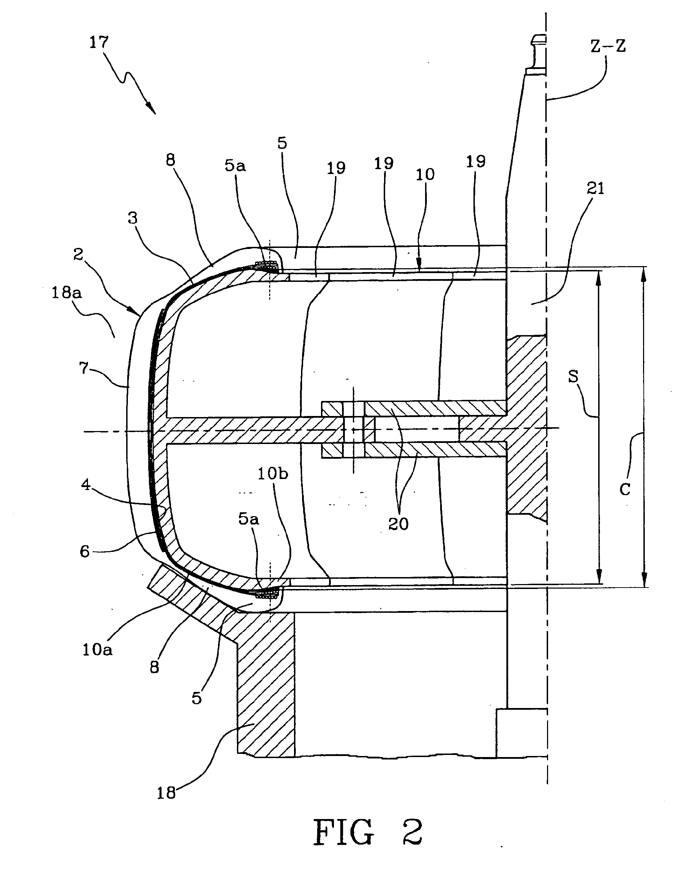

Apparatus 1 is designed to manufacture tyres 2 (Fig. 2) essentially comprising at least one carcass ply 3 internally coated with a layer of airproof elastomeric material or a so-called liner 4, two annular anchoring structures 5a in engagement with the circumferential edges of the carcass ply close to the regions usually identified as "beads" 5, a belt structure 6 circumferentially applied around the carcass ply 3, a tread band 7 circumferentially overlapping the belt structure 6 and two sidewalls 8 applied to the carcass ply 3 at laterally opposite positions and each extending from the corresponding bead 5 to the corresponding side edge of the tread band 7.

Apparatus 1 essentially comprises devices intended for building said tyres 2 and operating along a building line generally identified with 9, and devices for vulcanising the built tyres along the building line 9.

The building line 9 may comprise a plurality of building stations 11, 12, 13, 14, 15 for example, that are each provided to form one component of a tyre 2 under processing directly on a rigid toroidal support 10 having a forming surface 10a of a conformation corresponding to the inner conformation of the green tyre 2 when building has been completed. In more detail, by way of example, a first station 11 may be provided in which the liner 4 is made through winding of a continuous elongated element of elastomeric material into coils that are disposed close to each other and distributed along the forming surface 10a of the toroidal support 10. In at least one second building station 12 manufacture of one or more carcass plies 3 can be carried out, said carcass plies being obtained by laying strip-like elements formed from a continuous strip of elastomeric material on the toroidal support 10, in mutually approached circumferential relationship, said continuous strip comprising textile or metallic cords disposed in parallel side by side relationship. A third building station 13 can be dedicated to manufacture of the annular anchoring structures 5a integrated into the beads 5 of tyre 2, through laying of at least one continuous thread element in the form of radially superposed coils, which continuous thread element comprises at least one rubberised metallic cord. At least one fourth building station 14 can be dedicated to manufacture of the annular belt structure 6 obtained by laying strip-like elements, formed from a continuous strip of elastomeric material, in mutually approached circumferential relationship, said continuous strip preferably comprising metallic cords parallel to each other, and/or by winding up at least one rubberised preferably metallic reinforcing cord into coils disposed axially close to each other, in the crown portion of tyre 2. At least one fifth building station 15 can be provided for manufacture of the tread band 7 and the sidewalls 8. The tread band 7 and sidewalls 8 are preferably obtained through winding of at least one continuous elongated element of elastomeric material into coils disposed close to each other.

The building stations 11, 12, 13, 14, 15 distributed along the building line 9 can each simultaneously operate on a respective tyre 2 being processed, carried by a respective rigid toroidal support 10 and sequentially transferred from one building station to the subsequent one through robotized arms 16 or other suitable devices.

When building has been completed, the tyre 2 being processed reaches a transfer station 17 provided with devices 22 adapted to remove the rigid toroidal support 10 from the tyre itself, tyre 2 being preferably retained on a suitable support base 18 equipped with gripping means 18a that can be moved radially close to each other, as shown in Fig. 2. To enable disengagement from tyre 2, the rigid toroidal support 10 is preferably provided to have a dismountable structure consisting of a plurality of circumferential sectors 19 disposed in a circumferentially aligned relationship with each other.

The circumferential sectors 19 are mutually interconnected by a removable interconnection flange 20 carrying at least one grip shank 21 to be utilised for handling the toroidal support between the different building stations 11, 12, 13, 14, 15. The removing devices 22 can for example comprise a robotized arm, designed to take away the interconnection flange 20 and then pick up the circumferential sectors 19 individually in succession and remove them from the inside of tyre 2 by a combined oscillation and translation movement directed substantially in a radial direction towards the geometric rotation axis of the tyre 2 itself, as described in US Patent No. 6, 757, 955 in the name of the same Applicant, for example.

To facilitate removal of the toroidal support without running the risk of impairing the geometric and structural integrity of the green tyre 2, the forming surface 10a of the toroidal support 10 and therefore the inner surface of the built tyre 2 are advantageously provided to be without concavities or undercuts that may hinder removal of the circumferential sectors 19 from the inside of tyre 2. More particularly, to this aim it is provided that the bead seats 10b present on the toroidal support 10 be axially spaced apart by a distance "S" preferably higher than or equal to the maximum chord "C" of the forming surface 10a, i.e. the maximum axial distance measurable between axially opposite portions of the forming surface 10a, in a direction parallel to the geometric axis Z-Z of the toroidal support 10 itself. An axial distance S between the bead seats 10b that is slightly lesser than the maximum chord C such as shown in Fig. 2 for example, is also acceptable. However, preferably, measurement of the axial distance S between the bead seats 10b must be higher than 95% of the above specified maximum axial distance.

Thus it is advantageously possible to remove the rigid toroidal support 10 from the built tyre 2 without running the risk of impairing the geometric and structural integrity of tyre 2, in spite of the fact that said tyre 2, being still in a green state, has a very delicate and easily deformable structure when submitted to stresses even if of moderate extent.

The same robotized arm 22 used for removal of the rigid toroidal support 10, or another suitable device operating in the transfer station 17 or other adjacent work station, carries out engagement of the built green tyre 2 previously removed from the rigid toroidal support 10, on an expandable toroidal support 23.

In accordance with a possible alternative embodiment of the invention, engagement of tyre 2 on the expandable toroidal support 23 can be obtained by manufacturing the tyre components directly on the expandable toroidal support 23 itself. In accordance with this embodiment, one or more expandable toroidal supports 23 are handled along the building line 9 in place of the rigid toroidal supports 10, in the same manner as described in document WO 2004/080701 in the name of the Applicant.
In a further alternative embodiment in which rigid toroidal supports 10 are not required as well, the individual components of tyre 2 such as, for example, carcass plies 3, annular anchoring structures 5a, belt structure 6, sidewalls 8, tread 7, etc., can be each manufactured in the form of a semifinished product and sequentially assembled on at least one building drum (not shown) in order to build the green tyre 2 that is then transferred to and engaged on the expandable toroidal support 23 after removal from the building drum itself.

In accordance with the present invention, the expandable toroidal support 23 has an expandable bladder 24 preferably made in the form of a resiliently deformable membrane having a layered main portion 24a and carrying opposite circumferential edges 24b integrating possible circumferential anchoring inserts axially spaced apart from each other and extending concentric to a geometric axis X-X of the expandable toroidal support 23. In the embodiment shown, involving a step of transferring the green tyre 2 onto the expandable toroidal support 23, the main portion 24a is preferably made of elastomeric material substantially devoid of textile or metallic reinforcing inserts. Should tyre 2 be directly formed on the expandable toroidal support 23, it is preferable for at least the main portion 24a of the expandable bladder to be conveniently reinforced by textile and/or metallic inserts, as described in the above mentioned document WO 2004/080701, for example, to enable the bladder itself, when inflated to a given pressure, to take and maintain a conformation corresponding to the tyre 2 to be manufactured.

The circumferential edges 24b of bladder 24 are sealingly in engagement with respective flanges 25 coaxially facing each other and mutually interconnected by a centring member preferably comprising at least one central shank 26 projecting in axially opposite directions from the flanges 25 themselves. Associated with the central shank 26 are inflating devices comprising at least one feeding channel 27 extending longitudinally starting from one end of the shank itself and terminating at least at one or more connecting openings 27a radially opening into the expandable bladder 24, between the flanges 25.

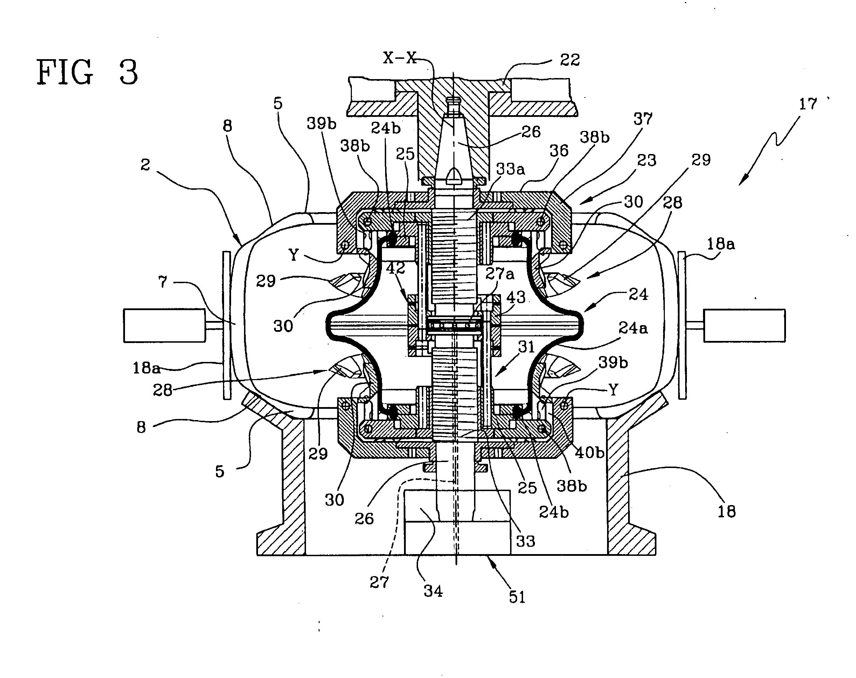

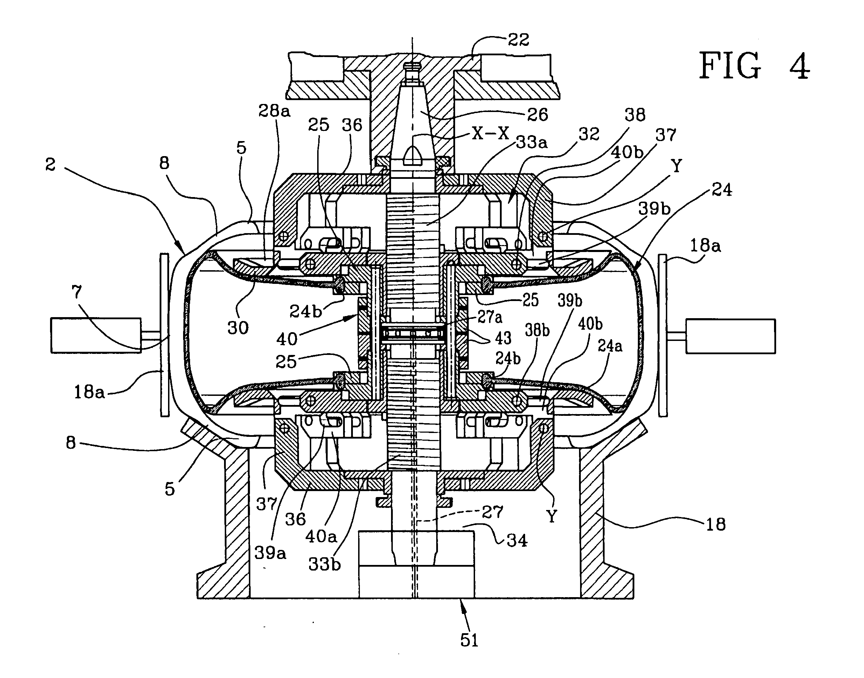

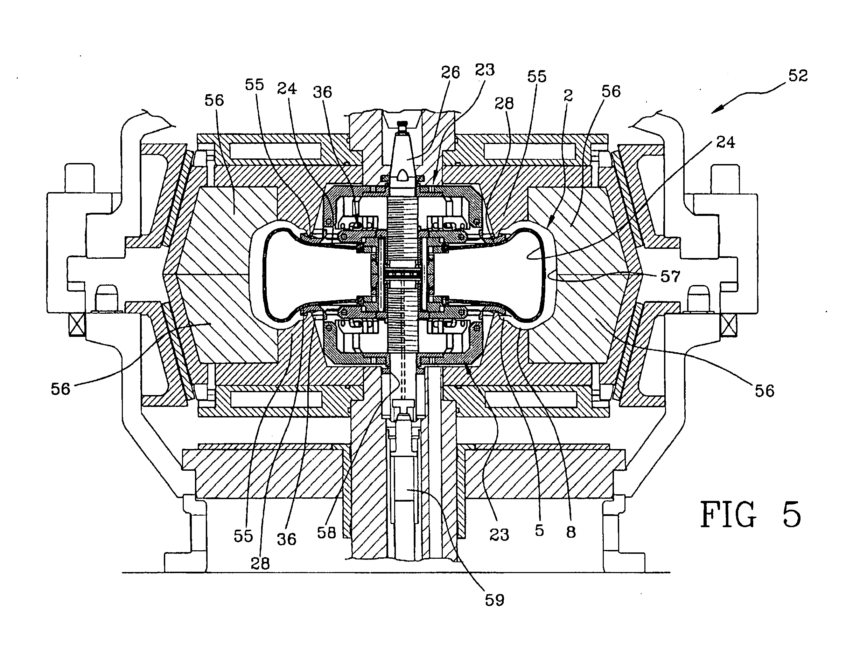

Through introduction of a fluid under pressure through the feeding channel 27, the expandable bladder 24 lends itself to be deformed between a rest condition at which, as shown in Fig. 3, it is radially contracted and has a maximum diametrical bulkiness smaller than the inner diameter of tyre 2 at the beads 5, and a work condition at which it is elastically expanded so that it acts against the inner surface of the tyre 2 being processed, as shown in Figs. 4 and 5.

The expandable toroidal support 23 further comprises a pair of pressure rings 28 external to the expandable bladder 24 and each comprising first pressure sectors 29 and second pressure sectors 30, circumferentially distributed in an alternated sequence around the geometric axis X-X of the expandable toroidal support 23.

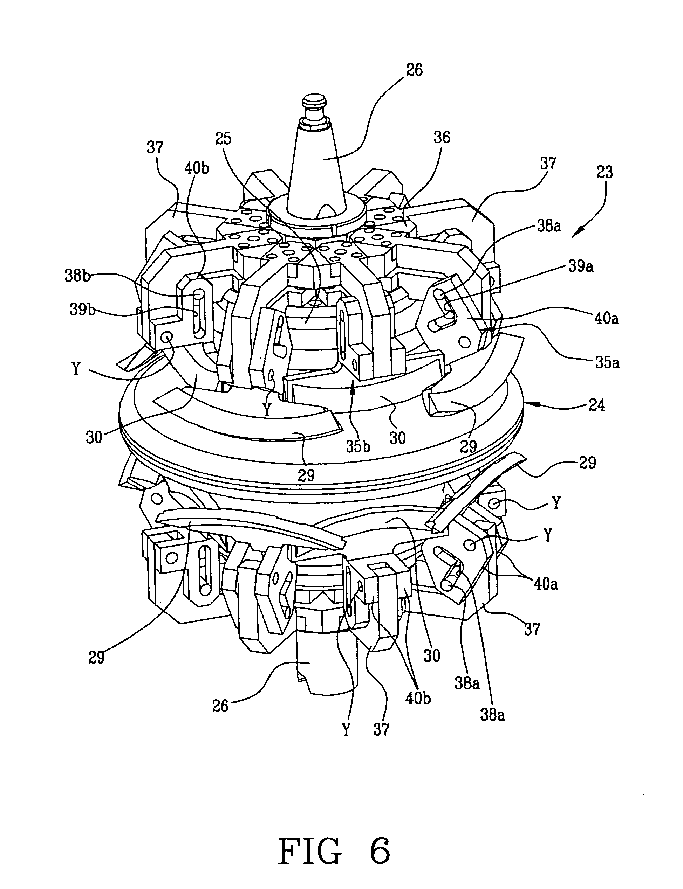

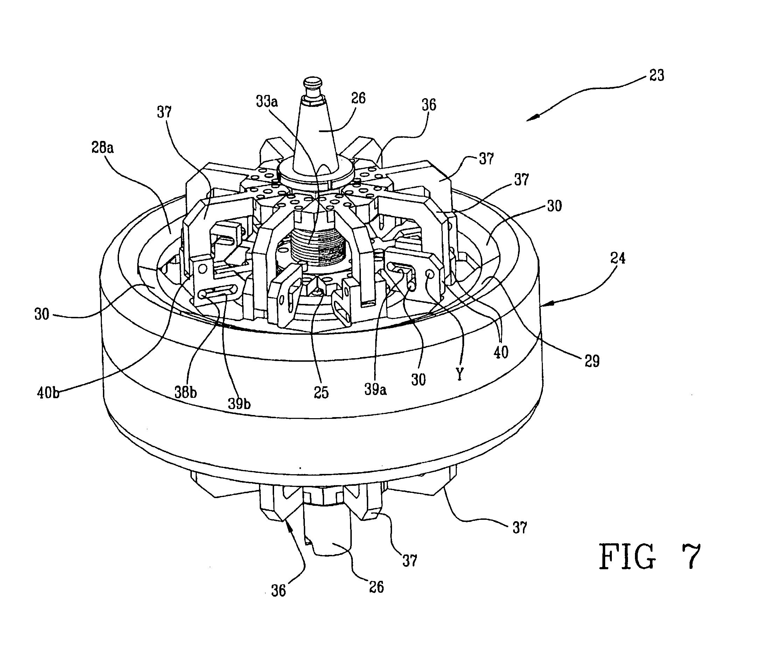

Driving devices 31 operate on the pressure rings 28 to selectively translate them from a work condition at which the sectors themselves are circumferentially in alignment with each other to define a substantially continuous abutment wall 28a extending radially away from the geometric axis X-X (Figs. 4 and 7) and a rest condition at which sectors 29, 30 are disposed close to the geometric axis to determine a radial contraction of the pressure ring (Figs. 3 and 6). Partly integrated into, or in any case operatively associated with the driving devices 31 are kinematic synchronisation members 32 to mechanically mutually constrain the pressure rings 29, 30 so as to impose a simultaneous and mutually symmetric movement on said rings between the rest condition and the work condition. To this aim, the flanges 25 are provided to be engaged along the central shank 26 by a right-hand screw thread 33a and a left-hand screw thread 33b respectively, formed along the central shank itself. Following rotations imparted to the central shank 26 by a rotating actuator 34 installed in the transfer station 17 for example, or carried by the removing device 22, the flanges 25 simultaneously translate away from or close to each other, depending on the direction of the rotation imparted to the central shank itself.

Each of the flanges 25 is operatively interconnected with one of the pressure rings 28 by first and second transmission linkages 35a, 35b operating on the first pressure sectors 29 and on the second pressure sectors 30, respectively.

In more detail, the first and second pressure sectors 29, 30 belonging to each of the pressure rings 28 are oscillatably hinged on at least one support element 36 rotatably carried by the central shank 26 and axially fastened to the latter. In the embodiment shown each support element 36 is substantially disposed in a spreading-out manner and has a plurality of radial arms 37 to which are respectively secured said first and second pressure sectors 29, 30, rotatably around respective hinging axes Y tangent to a circumference concentric to the geometric axis X-X of the expandable toroidal support 23.

Each of the first transmission linkages 35a comprises a first slider 38a and a first guide seat 38b carried by one of the first pressure sectors 29 and one of said flanges 25, respectively. Likewise, each of the second transmission linkages 35b comprises a second slider 38b and a second guide seat 39b carried by one of the second pressure sectors 30 and one of said flanges 25.

In the embodiment shown, the flanges 25 peripherally carry the first and second sliders 38a, 38b, circumferentially distributed in an alternated sequence, while the first and second guide seats 39a, 39b are formed in respective first and second arms 40a, 40b carried by the first and second pressure sectors 29, 30 respectively, and radially projecting relative to the hinging axes Y. Each of the first and second sliders 38a, 38b is slidably engaged along the respective first or second guide seat 39a, 39b, at a constraint point radially offset towards the geometric axis X-X, relative to the hinging axis Y of the respective first or second pressure sector 29, 30, in such a manner that each axial movement of flanges 25 corresponds to an angular rotation of the pressure sectors themselves around the respective hinging axes Y.

Advantageously, the second guide seats 39b are of different shape than the first guide seats 39a so that the second pressure sectors 30 are induced to reach the work condition subsequently with respect to the first pressure sectors 29. More particularly, while the second guide seats 39b carried by the second pressure sectors 30 have a substantially rectilinear extension, each of the first guide seats 39a carried by the first pressure sectors 29 has an L-shaped configuration with a first length 41a and a second length 41b disposed consecutively according to an angled extension.

In the work condition, the second rectilinear guide seats 39b are oriented in a radial direction to the geometric axis X-X, so that at each axial displacement of the flanges 25, a rotation of the second pressure sectors 30 around the respective hinging axes Y corresponds. Still with reference to the work condition, the first sliders 38a each engage the respective first L-shaped guide seat 39a at the second length 41b oriented parallel to the geometric axis X-X, so that the first pressure sectors 29 can keep a stationary orientation during an initial movement step of the flanges 25 apart from each other, until the first sliders 38a reach the first length 41a of the first guide seats 39a.

Consequently, during movement of the flanges apart from each other starting from the work condition, the second transmission linkages 35b operate movement of the second pressure sectors 30 when the flanges 25 overcome a first reference position along the central shank 26, which is coincident with the end-of-stroke position of the flanges 25 themselves moving close to each other, while the first transmission linkages 35a operate movement of the first pressure sectors 29 when the flanges 25 reach a second reference position axially spaced apart from the first reference position and coincident with positioning of each of the first sliders 38a in the passage region between the first and second lengths 41a, 41b of the respective first guide seat 39a.

On reaching the rest condition, the first and second pressure sectors 29, 30 are angularly rotated towards the geometric axis X-X, the first pressure sectors 29 partly overlapping the second pressure sectors 30, as shown in Figs. 3 and 6.

To prevent undesirable fluid escape through the coupling screw threads 33a, 33b between the flanges 25 and central shank 26, the expandable toroidal support 23 further comprises sealing members 42 provided to hermetically isolate the feeding channel 27 from said threads at least when the pressure rings 28 are in the work position.

In a preferred embodiment, these sealing members 42 comprise at least one sleeve 43 sealingly engaged around the central shank 26 at the connecting openings 27a. The sleeve 43 is preferably made up of two halves 43a mutually mating against respective abutment shoulders 44 provided on the central shank 26 at axially opposite positions relative to the connecting openings 27a.

When mating has occurred, the sleeve 43 defines an annular space 45 confining the central shank 26 close to the connecting openings 27a, and communicating with the inside of the expandable bladder 24 by one or more communication passages 46 formed through the sleeve 43 itself in the form of radial slits. First sealing elements 47a hermetically isolate the annular space 45 from axially opposite parts relative to the connecting openings 27a.

The sleeve 43 has two cylindrical closure seats 48 opening in axially opposite directions and adapted to be slidably engaged by respective hubs 49 axially projecting from the flanges 25, when the latter are axially moved close, on reaching of the work condition. Second sealing elements 47b provided in the cylindrical closure seats 48 lend themselves to act against the hubs 49 to hermetically isolate the inside of the expandable bladder 24 from the screw threads 33a, 33b.

The sleeve 43 in addition is adapted to slidably engage one or more rotation-preventing rods 50 extending parallel to the geometric axis X-X from each of flanges 25, so as to prevent relative rotations between the flanges 25 themselves thereby maintaining movement synchronisation between the pressure sectors 29, 30 belonging to one pressure ring 28 or the other, respectively.

For engagement of the built green tyre 2, the expandable toroidal support 23 with the expandable bladder 24 in the rest condition is coaxially introduced into tyre 2, being preferably retained on the same support base 18 as used during the step of removing the rigid toroidal support 10, as shown in Fig. 3. More particularly, the expanded toroidal support 23 is coaxially positioned in tyre 2, in such a manner that the expandable bladder 24 is substantially centred in an axial direction relative to an equatorial plane of tyre 2.

When positioning has occurred, the central shank 26 is ready for engagement with a drive unit 51 carrying a pneumatic coupling (not shown) connecting the feeding channel 27 to a feeding line of a working fluid. Also integrated into the drive unit 51 can be the above mentioned rotating actuator 34 that is operatively coupled with one end of the central shank 26 to cause driving in rotation of same. Alternatively, the drive unit can be directly carried by the robotized arm 22 employed as the removing device.

One or more retainers, not shown as they can be made in a manner known by itself, can be provided in the transfer station 17 to operate on the support members so as to prevent the expandable toroidal support 23 from being driven in rotation together with the central shank 26. Consequently, by effect of the right-hand 33a and left-hand 33b screw threads, the rotation imparted to the central shank 26 makes flanges 25 move progressively closer starting from the rest condition. During translation of flanges 25 to the work condition, the first and second pressure sectors 29, 30 radially rotate outwardly around the respective hinging axes Y.

The first pressure sectors 29 reach the respective work condition when the second pressure sectors 30 are still in an intermediate phase of their movement. When the first pressure sectors 29 reach the respective work condition, the first sliders 38a are positioned in the passage region between the first and second lengths 41a, 41b of the respective first L-shaped guide seats 39a carried by the first pressure sectors themselves, while the second sliders 38b are positioned at an intermediate point of the extension of the second rectilinear guide seats 39b, carried by the second pressure sectors 30.
As mutual approaching of flanges 25 goes on, the first sliders 38a associated with the first pressure sectors 29 freely slide along the second lengths 41b of the respective first guide seats 39a oriented parallel to the geometric axis X-X, while due to the action of the second sliders 38b on the second rectilinear guide seats 39b provided in the second pressure sectors 30, movement of said sectors 30 to the work condition goes on. On reaching the work condition, introduction of each of the second pressure sectors 30 circumferentially between two of the first pressure sectors 29 previously positioned in the work condition takes place.

Concurrently with movement of the pressure sectors 29, 30 between the rest condition and work condition, the circumferential edges of the expandable bladder 24 anchored to the respective flanges 25 carry out an axial translation until a maximum mutual approaching at the work condition is reached.

When the work condition is reached, also sealed introduction of the hubs 49 carried by the flanges 25 into the respective cylindrical closure seats 48 provided in the sleeve 43 is obtained.

Subsequently, admission of nitrogen or other working fluid to the inside of the expandable bladder 24 is enabled, so as to determine elastic expansion of the expandable bladder 24 to the work condition. When the expandable bladder 24 adheres to the inner surface of tyre 2 to such an extent that a sufficient engagement stability between the expandable toroidal support 23 and tyre 2 is ensured, admission of working fluid is stopped. The material to be used for manufacture of the expandable bladder 24 as well as thickness of the bladder are preferably such selected as to obtain a sufficiently steady engagement between the tyre 2 and expandable bladder 24 when an inner pressure just as an indication not exceeding about 1 bar and preferably in the order of about 0.5 bar is reached (the pressure values stated in the present description are to be intended as values of relative pressure with respect to the atmospheric pressure), so as to prevent the occurrence of stresses capable of causing undesirable deformation of the green tyre 2. It is to be pointed out that following said engagement, the sidewalls 8 and beads 5 of tyre 2 due to the conformation they have received during the building step, can keep a spread-apart orientation relative to the expandable toroidal support 23, the conformation of which in a working condition is substantially consistent with the inner configuration of the finished tyre 2, at least close to the beads.

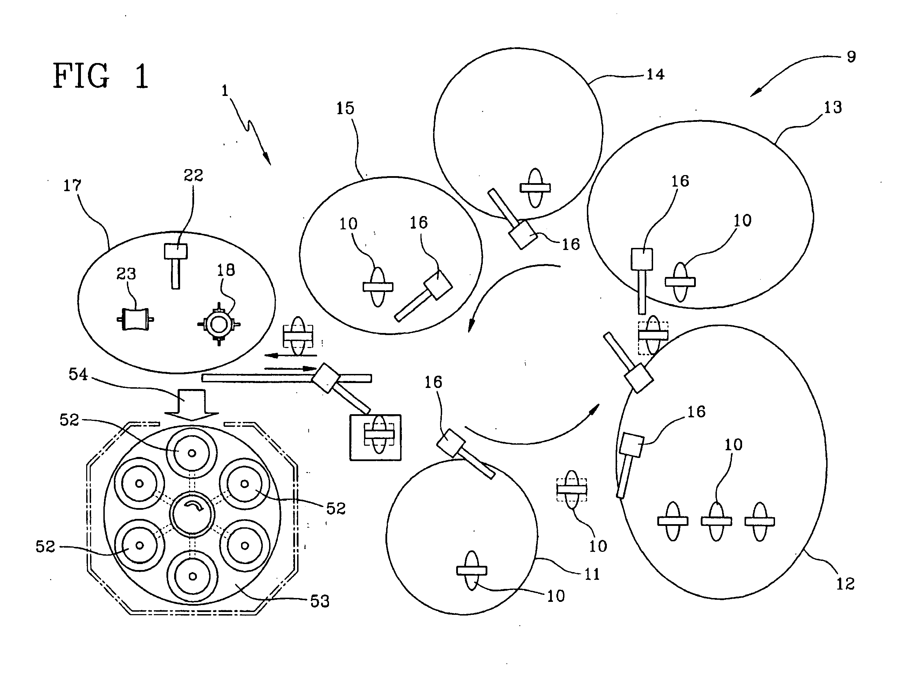

Through the same transfer device 22 as used for engagement between the expandable toroidal support 23 and tyre 2, or by other suitable equipment, the expandable toroidal support 23 and green tyre 2 engaged thereon are introduced into a vulcanisation mould 52. In the embodiment shown in Fig. 1 a plurality of vulcanisation moulds 52 is provided and they are disposed in a rotatable structure 53 so as to be sequentially brought to a loading/unloading position 54 wherein removal of the vulcanised tyre 2 and subsequent introduction of the green tyre 2 coming from the building line 9 is carried out.

Each vulcanisation mould 52 essentially has a pair of axially opposite plates 55 provided to operate on the beads 5 and sidewalls 8 of tyre 2, and a plurality of moulding sectors 56 provided to operate against the tread band 7 and together with the plates 55 defining a moulding cavity 57 of a conformation corresponding to the outer conformation to be given to the vulcanised tyre 2. Preferably, the moulding cavity 57 has diametrical sizes slightly bigger than the diametrical sizes of the green tyre 2.

During introduction of tyre 2 into the vulcanisation mould 52, the central shank 26 carried by the expandable toroidal support 23 lends itself to be fitted in at least one centring seat 58 provided in the vulcanisation mould 52 so as to ensure centred positioning of tyre 2 inside the vulcanisation mould.

Then a moulding and vulcanisation cycle for tyre 2 is started. To this end, the vulcanisation mould 52 is closed through axial approaching of the axially opposite plates 55 and simultaneous radial approaching of the moulding sectors 56. Following closure of the vulcanisation mould 52, the sidewalls 8 and beads 5 of the tyre 2 itself previously disposed in a spread-apart orientation, are axially approached relative to the expandable toroidal support 23.

On completion of the closing operation of the vulcanisation mould 52, the pressure rings 28 having the respective sectors 29, 30 locked to the work condition by effect of the transmission linkages 35a, 35b, are ready to act in an efficient manner against the inner surfaces of tyre 2, particularly at the beads 5 and the radially internal part of sidewalls 8, to counteract the axial thrust exerted by the plates 55 during the end step for closure of the vulcanisation mould 52. The beads of tyre 2 and the radially internal part of the sidewalls are therefore sandwiched between the plates 55 of the vulcanisation mould 52 and the pressure rings 28 and consequently submitted to an efficient "volume" moulding according to a well defined geometric configuration, capable of eliminating possible surface unevennesses given to the beads 5 and sidewalls 8 during the building step, due for example to the above described laying of elongated elements of elastomeric material in the form of coils disposed close to each other.

Following closure of the vulcanisation mould 52, a vulcanisation fluid is fed to the inside of the expandable bladder 24 through a feeding circuit 59 directed to the vulcanisation mould 52 and adapted to be operatively coupled with the feeding channel 27 formed in the expandable toroidal support 23.

Thus moulding of tyre 2 is completed through pressing of the latter against the inner surfaces of the vulcanisation mould 52 during vulcanisation of same by administration of heat supplied by the same working fluid introduced into the expandable bladder 24 and/or other heating devices associated with the mould 52 and provided to this aim.

When vulcanisation is over, the mould 52 is opened again to enable removal of the tyre 2 together with the expandable toroidal support 23 and positioning of the same into the transfer station 17 or other possible auxiliary station where, by said robotized arm 22 or other suitable device, the expandable toroidal support 23 will be removed from tyre 2.

Disengagement of the expandable toroidal support 23 can be advantageously carried out following a reverse operating sequence to that followed for its engagement within tyre 2. The symmetric and synchronised movement of the first and second pressure sectors 29, 30 that can be easily controlled by regulating the rotation speed imparted to the central shank 26, promotes gradual separation of the pressure rings 28 and the (suitably deflated) expandable bladder 24 from the inner walls of tyre 2, without running the risk of transmitting anomalous stresses to the tyre itself that could give rise to structural strains.

## Claims

1. A process for manufacturing tyres for vehicle wheels, comprising the steps of:
- engaging a green tyre (2) on an expandable toroidal support (23) including an expandable bladder (24) having circumferential edges (24a) concentric to a geometric axis (X-X) of the expandable toroidal support (23) and axially spaced apart from each other, and a pair of pressure rings (28) operating at axially opposite positions on the expandable bladder (24) and each comprising pressure sectors (29, 30) circumferentially distributed in an alternated sequence around said geometric axis (X-X);
- introducing the green tyre (2) and the expandable toroidal support (23) into a vulcanisation mould (52);
- moulding and vulcanising the green tyre (2);
- removing the expandable toroidal support (23) from the tyre (2);
wherein at least one of said engaging and removing steps comprises a movement step for shifting each pressure ring (28) between a work condition at which the pressure sectors (29, 30) are circumferentially aligned with each other to define a substantially continuous abutment wall (28a) extending radially away from the geometric axis (X-X), and a rest condition at which the pressure sectors (29, 30) are moved close to the geometric axis (X-X) to determine a radial contraction of the pressure ring (28);
wherein the pressure rings (28) are mutually constrained for simultaneously moving in a mutually symmetric manner during the movement step.

2. A process as claimed in the preceding claim, wherein before the engaging step the following steps are carried out:
- building the tyre (2) on a rigid toroidal support (10) externally having a forming surface (10a) with a conformation corresponding to an inner conformation of the built green tyre (2);
- removing the rigid toroidal support (10) from the tyre (2).

3. A process as claimed in one or more of the preceding claims, wherein engagement of the tyre (2) on the expandable toroidal support (23) comprises the steps of:
- introducing the expandable toroidal support (23) coaxially into the tyre (2);
- carrying out said movement step to shift the pressure rings (28) to the work condition;
- expanding the expandable bladder (24) towards a work condition at which it substantially conforms in shape to the inner configuration of the tyre (2), starting from a rest condition at which said expandable bladder (24) is radially contracted with respect to the work condition.

4. A process as claimed in the preceding claim, wherein movement of the pressure rings (28) to the work condition starts before expansion of the expandable bladder (24).

5. A process as claimed in one or more of the preceding claims, wherein in the rest condition the pressure rings (28) are angularly rotated towards said geometric axis (X-X).

6. A process as claimed in one or more of the preceding claims, wherein each pressure ring (28) comprises first and second circumferentially distributed pressure sectors (29, 30), movement of each pressure ring (28) to the work condition comprising the step of positioning the first pressure sectors (29) to the work condition and inserting each of the second pressure sectors (30) between two of said first pressure sectors (29).

7. A process as claimed in one or more of the preceding claims, wherein movement of the pressure rings (28) between the work condition and rest condition is driven by axial translation of a pair of flanges (25) operatively connected to said pressure rings (28) by kinematic synchronisation members (32) movable along a central shank (26) extending on the geometric axis (X-X) of the expandable toroidal support (23).

8. A process as claimed in the preceding claim, wherein axial translation of the flanges (25) is carried out by rotation of the central shank (26), through a right-hand screw thread (33a) and a left-hand screw thread (33b) formed along the central shank (26) and operatively engaging each of said flanges (25).

9. A process as claimed in claim 6 and in one or more of claims 7 and 8, wherein movement of the first pressure sectors (29, 30) of each pressure ring (28) starts when the respective flange (25) overcomes a first reference position along the central shank (26), while movement of the second pressure sectors (29, 30) starts when the flange (25) reaches a second reference position that is axially spaced apart from the first reference position.

10. A process as claimed in one or more of claims 6 to 9, further comprising the step of mutually translating the circumferential edges (24b) of the expandable bladder (24) in an axial direction, simultaneously with movement of the pressure sectors (29, 30) between the rest condition and work condition.

11. A process as claimed in the preceding claim, wherein the circumferential edges (24b) of the expandable bladder (24) are axially moved close during movement of the pressure sectors (29, 30) to the work condition.

12. A process as claimed in one or more of claims 7 to 11, wherein expansion of the expandable bladder (24) is carried out by admission of a fluid to a feeding channel (27) extending along the central shank (26) and terminating at least at one connecting opening (27a) radially opening into the expandable bladder (24).

13. A process as claimed in one or more of claims 8 to 12, wherein said right-hand and left-hand screw threads (33a, 33b) are hermetically isolated relative to the expandable bladder (24) following movement of the pressure sectors (29, 30) to the work condition.

14. A process for manufacturing tyres for vehicle wheels, comprising the steps of:
- building a green tyre (2) on an expandable toroidal support (23) including an expandable bladder (24) having circumferential edges (24b) concentric to a geometric axis (X-X) of the expandable toroidal support (23) and axially spaced apart from each other, and a pair of pressure rings (28) operating at axially opposite positions on the expandable bladder (24) and each comprising pressure sectors (29, 30) circumferentially distributed in an alternated sequence around said geometric axis (X-X);
- introducing the green tyre (2) and the expandable toroidal support (23) into a vulcanisation mould (52);
- moulding and vulcanising the green tyre (2);
- removing the expandable toroidal support (23) from the tyre (2);
wherein said removing step comprises a movement step to shift each pressure ring (28) between a work condition at which the pressure sectors (29, 30) are circumferentially aligned with each other to define a substantially continuous abutment wall (28a) extending radially away from the geometric axis (X-X), and a rest condition at which the pressure sectors (29, 30) are disposed close to the geometric axis (X-X) to determine a radial contraction of the pressure ring (28); wherein the pressure rings (28) are mutually constrained for simultaneous movement in a mutually symmetric manner during the movement step.

15. A process as claimed in claim 14, wherein the building step is carried out by forming components of the tyre (2) under processing directly on the expandable toroidal support (23) that in the work condition is provided with said expandable bladder (24) substantially conforming in shape to the inner conformation of the tyre (2).

16. An expandable toroidal support (23) comprising an expandable bladder (24) having circumferential edges (24b) concentric to a geometric axis (X-X) of the expandable toroidal support (23) and axially spaced apart from each other and a pair of pressure rings (28) operating at axially opposite positions on the expandable bladder (24) and each comprising pressure sectors (29, 30) circumferentially distributed around said geometric axis (X-X);
wherein said expandable toroidal support (23) further comprises:
- driving devices (31) operating on the pressure rings (28) to selectively translate them between a work condition at which the pressure sectors (29, 30) of each pressure ring (28) are circumferentially in alignment with each other to define a substantially continuous abutment wall (28a) extending radially away from the geometric axis (X-X), and a rest condition at which the pressure sectors (29, 30) are moved close to the geometric axis (X-X) to determine a radial contraction of the pressure ring (28);
- kinematic synchronisation members (32) being operatively associated with the driving devices (31) to cause the pressure rings (28) to be mechanically mutually constrained so as to impose a simultaneous and mutually symmetric movement on them between a rest condition and a work condition.

17. An expandable toroidal support (23) as claimed in claim 16, wherein the expandable bladder (24) when expanded is in a work condition at which it substantially conforms in shape to the inner conformation of the tyre (2), while in a rest condition said expandable bladder (24) is radially contracted relative to the work condition.

18. An expandable toroidal support (23) as claimed in claim 16 or 17, wherein the driving devices (31) comprise two flanges (25) that are movable along a central shank (26) extending on the geometric axis (X-X) of the expandable toroidal support (23) and are operatively interconnected with the pressure rings (28)
through said kinematic synchronisation members (32).

19. An expandable toroidal support (23) as claimed in claim 16, wherein in the rest condition the pressure rings (28) are angularly rotated towards said geometric axis (X-X).

20. An expandable toroidal support (23) as claimed in claim 16, wherein each pressure ring (28) comprises first and second pressure sectors (29, 30) that are circumferentially distributed in an alternated sequence, the second pressure sectors (30) being each insertable between two of said first pressure sectors (29) at the work condition.

21. An expandable toroidal support (23) as claimed in claim 16, wherein said kinematic synchronisation members (32) for each pressure ring (28) comprise at least one support element (36) rotatably carried by the central shank (26) and axially fastened relative to the latter, and carrying at least one of said first and second pressure sectors (29, 30) rotatably around a hinging axis (Y) tangent to a circumference concentric to the geometric axis (X-X) of the expandable toroidal support (23).

22. An expandable toroidal support (23) as claimed in claim 18, wherein said inflating devices comprise at least one feeding channel (27) extending along the central shank (26) and terminating at least at one connecting opening (27a) radially opening into the expandable bladder (24).

23. An apparatus for manufacturing tyres comprising:
- at least one expandable toroidal support (23)
- devices for engaging the green tyre (2) on said at least one expandable toroidal support (23);
- devices for introducing the green tyre (2) and the expandable toroidal support (23) into a vulcanisation mould (52);
- devices for moulding and vulcanising the green tyre (2) ;
- devices for removing the expandable toroidal support (23) from the tyre (2);
wherein said expandable toroidal support (23) is made according to anyone of claims 16 to 22.

24. An apparatus as claimed in the preceding claim, further comprising
- at least one rigid toroidal support (10) externally having a forming surface (10a) of a conformation corresponding to the inner conformation of the built green tyre (2);
- devices for building the tyre (2) on said rigid toroidal support (10);
- devices for removing the rigid toroidal support (10) from the tyre (2).

## Patentansprüche

1. Verfahren zum Herstellen von Reifen für Fahrzeugräder mit den Schritten des:
- In-Eingriff-Bringens eines unbearbeiteten Reifens (2) auf einem expandierbaren ringförmigen Lager (23) mit einem expandierbaren Balg (24) mit Umfangskanten (24a) konzentrisch zu einer geometrischen Achse (X-X) des expandierbaren ringförmigen Lagers (23) und axial voneinander beabstandet, und mit einem Paar an Druckringen (28), die an axial gegenüberliegenden Position auf den expandierbaren Balg (24) einwirken und die jeweils Drucksektoren (29, 30) aufweisen, die umfänglich um die geometrische Achse (X-X) in einer abwechselnden Folge verteilt sind,
- Einführens des unbearbeiteten Reifens (2) und des expandierbaren ringförmigen Lagers (23) in eine Vulkanisierungsform (52),
- Formens und Vulkanisierens des unbearbeiteten Reifens (2),
- Entfernens des expandierbaren ringförmigen Lagers (23) von dem Reifen (2),
wobei wenigstens einer der In-Eingriff-Bring- und Entfern-Schritte einen Bewegungsschritt aufweist, um jeden Druckring (28) zwischen einem Arbeitszustand, in dem die Drucksektoren (29, 30) entlang des Umfangs miteinander ausgerichtet sind, um eine im Wesentlichen kontinuierliche Anliegewand (28a) zu definieren, die sich radial von der geometrischen Achse (X-X) weg erstreckt, und einem Ruhezustand zu verändern, in dem die Drucksektoren (29, 30) nahe an die geometrische Achse (X-X) bewegt werden, um ein radiales Zusammenziehen des Druckrings (28) zu veranlassen,
wobei die Druckringe (28) wechselseitig verschränkt sind, um sich gleichzeitig in einer zueinander symmetrischen Art während des Bewegungsschritts zu bewegen.

2. Verfahren nach dem vorhergehenden Anspruch, bei dem vor dem In-Eingriff-Bring-Schritt die folgenden Schritte ausgeführt werden:
- Aufbauen des Reifens (2) auf einem starren ringförmigen Lager (10), das extern eine Formungsoberfläche (10a) mit einer Ausgestaltung aufweist, welche einer inneren Ausgestaltung des aufgebauten unbearbeiteten Reifens (2) entspricht,
- Entfernen des starren ringförmigen Lagers (10) von dem Reifen (2).

3. Verfahren nach einem oder mehreren der vorhergehenden Ansprüche, bei dem das In-Eingriff-Bringen des Reifens (2) auf dem expandierbaren ringförmigen Lager (23) als Schritte aufweist:
- Einführen des expandierbaren ringförmigen Lagers (23) koaxial in den Reifen (2),
- Durchführen des Bewegungsschritts, um die Druckringe (28) zu dem Arbeitszustand zu verschieben,
- Expandieren des expandierbaren Balgs (24) zu einem Arbeitszustand hin, in dem es im Wesentlichen in der Gestalt der inneren Konfiguration des Reifens (2) entspricht, beginnend von einem Ruhezustand, in dem der expandierbare Balg (24) bezüglich des Arbeitszustands radial kontrahiert ist.

4. Verfahren nach dem vorhergehenden Anspruch, bei dem die Bewegung der Druckringe (28) zu dem Arbeitszustand vor der Expansion des expandierbaren Balgs (24) beginnt.

5. Verfahren nach einem oder mehreren der vorhergehenden Ansprüche, bei dem in dem Ruhezustand die Druckringe (28) winkelmäßig zu der geometrischen Achse (X-X) hin gedreht werden.

6. Verfahren nach einem oder mehreren der vorhergehenden Ansprüche, bei dem jeder Druckring (28) erste und zweite umfänglich verteilte Drucksektoren (29, 30) aufweist, wobei eine Bewegung jedes Druckrings (29) zu dem Arbeitszustand hin den Schritt des Positionierens der ersten Drucksektoren (29) in dem Arbeitszustand und das Einführen jedes der zweiten Drucksektoren (30) zwischen zwei der ersten Drucksektoren (29) aufweist.

7. Verfahren nach einem oder mehreren der vorhergehenden Ansprüche, bei dem die Bewegung der Druckringe (28) zwischen dem Arbeitszustand und dem Ruhezustand durch eine axiale Verschiebung eines Paars an Flanschen (25), die operativ mit den Druckringen (28) verbunden sind, durch kinematische Synchronisierungselemente (32) angetrieben wird, die entlang einer zentralen Welle (26) beweglich sind, die sich entlang der geometrischen Achse (X-X) des expandierbaren ringförmigen Lagers (23) erstreckt.

8. Verfahren nach dem vorhergehenden Anspruch, bei dem die axiale Verschiebung der Flansche (25) durch Drehung der zentralen Welle (26) durch ein rechtshändiges Schraubgewinde (33a) und ein linkshändiges Schraubgewinde (33b) ausgeführt wird, die entlang der zentralen Welle (26) ausgebildet sind und operativ mit jedem der Flansche (25) eingreifen.

9. Verfahren nach Anspruch 6 oder nach einem oder mehreren der Ansprüche 7 und 8, bei dem eine Bewegung der ersten Drucksektoren (29, 30) jedes Druckrings (28) beginnt, wenn der jeweilige Flansch (29) eine erste Referenzposition entlang der zentralen Welle (26) überschreitet, während die Bewegung der zweiten Drucksektoren (29, 30) beginnt, wenn der Flansch (25) eine zweite Referenzposition erreicht, die axial von der ersten Referenzposition beabstandet ist.

10. Verfahren nach einem oder mehreren der Ansprüche 6 bis 9, ferner mit dem Schritt des wechselseitigen Versetzens der Umfangskanten (24b) des expandierbaren Balgs (24) in eine Axialrichtung gleichzeitig mit der Bewegung der Drucksektoren (29, 30) zwischen dem Ruhezustand und dem Arbeitszustand.

11. Verfahren nach dem vorhergehenden Anspruch, bei dem die Umfangskanten (24b) des expandierbaren Balgs (24) während der Bewegung der Drucksektoren (29, 30) zu dem Arbeitszustand axial nahe bewegt werden.

12. Verfahren nach einem oder mehreren der Ansprüche 7 bis 11, bei dem die Expansion des expandierbaren Balgs (24) durch Einbringen eines Fluids zu einem Zuführkanal (27) durchgeführt wird, der sich entlang der zentralen Welle (26) erstreckt und der wenigstens bei einer Verbindungsöffnung (27a) endet, die sich radial in den expandierbaren Balg (24) öffnet.

13. Verfahren nach einem oder mehreren der Ansprüche 8 bis 12, bei dem die rechtshändigen und linkshändigen Schraubgewinde (33a, 33b) bezüglich des expandierbaren Balgs (24) im Anschluss an die Bewegung der Drucksektoren (29, 30) zu dem Arbeitszustand hin hermetisch isoliert sind.

14. Verfahren zum Herstellen von Fahrzeugrädern mit den Schritten des:
- Herstellens eines unbearbeiteten Reifens (2) auf einem expandierbaren ringförmigen Lager (23) mit einem expandierbaren Balg (24) mit Umfangskanten (24b) konzentrisch zu einer geometrischen Achse (X-X) des expandierbaren ringförmigen Lagers (23) und axial voneinander beabstandet, und mit einem Paar an Druckringen (28), die an axial gegenüberliegenden Positionen des expandierbaren Balgs (24) betätigt werden und die jeweils Drucksektoren (29, 30) aufweisen, die umfänglich in einer abwechselnden Folge um die geometrische Achse (X-X) verteilt sind,
- Einführens des unbearbeiteten Reifens (2) und des expandierbaren ringförmigen Lagers (23) in eine Vulkanisierungsform (52),
- Ausformens und Vulkanisierens des unbearbeiteten Reifens (2),
- Entfernens des expandierbaren ringförmigen Lagers (23) von dem Reifen (2),
wobei der Entfernschritt einen Bewegungsschritt aufweist, um jeden Druckring (28) zwischen einem Arbeitszustand, in dem die Drucksektoren (29, 30) umfänglich miteinander ausgerichtet sind, um eine im Wesentlichen kontinuierliche Anlagewand (28a) zu definieren, die sich radial von der geometrischen Achse (X-X) weg erstreckt, und einem Ruhezustand zu verändern, in dem die Drucksektoren (29, 30) nahe an der geometrischen Achse (X-X) vorgesehen sind, um eine radiale Kontraktion des Druckrings (28) zu veranlassen,
wobei die Druckringe (28) wechselseitig verschränkt sind zur gleichzeitigen Bewegung in einer wechselseitig symmetrischen Art während des Bewegungsschritts.

15. Verfahren nach Anspruch 14, bei dem der Aufbauschritt durch Ausbilden von Komponenten des Reifens (2) unter Bearbeitung direkt auf dem expandierbaren ringförmigen Lager (23) durchgeführt wird, der in dem Arbeitszustand mit dem expandierbaren Balg (24) versehen ist, der in der Gestalt im Wesentlichen der inneren Ausgestaltung des Reifens (2) entspricht.

16. Expandierbares ringförmiges Lager (23) mit einem expandierbaren Balg (24) mit Umfangskanten (24b) konzentrisch zu einer geometrischen Achse (X-X) des expandierbaren ringförmigen Lagers (23) und axial voneinander beabstandet, und mit einem Paar an Druckringen (28), die an axial gegenüberliegenden Positionen auf den expandierbaren Balg (24) einwirken und die jeweils Drucksektoren (29, 30) aufweisen, die entlang des Umfangs um die geometrische Achse (X-X) verteilt sind,
wobei das expandierbare ringförmige Lager (23) ferner aufweist:
- Antriebseinrichtungen (31), die auf die Druckringe (28) einwirken, um diese zwischen einem Arbeitszustand, in dem die Drucksektoren (29, 30) jedes Druckrings (28) umfänglich miteinander ausgerichtet sind, um eine im Wesentlichen kontinuierliche Anlagewand (28a) zu definieren, die sich radial von der geometrischen Achse (X-X) weg erstreckt, und einem Ruhezustand wahlweise umzuwandeln, in dem die Drucksektoren (29, 30) nahe an die geometrische Achse (X-X) bewegt werden, um eine radiale Kontraktion des Druckrings (28) zu veranlassen,
- kinematische Synchronisierungselemente (32), die operativ den Antriebseinrichtungen (31) zugeordnet sind, um die Druckringe (28) dazu zu bringen, mechanisch gegenseitig verschränkt zu sein, um somit eine gleichzeitige und zueinander symmetrische Bewegung dieser zwischen einem Ruhezustand und einem Arbeitszustand zu erzwingen.

17. Expandierbares ringförmiges Lager (23) nach Anspruch 16, bei dem der expandierbare Balg (24), wenn expandiert, in einem Arbeitszustand ist, in dem er im Wesentlichen in der Gestalt der inneren Ausgestaltung des Reifens (2) entspricht, während in einem Ruhezustand des expandierbaren Balgs (24) radial bezüglich des Arbeitszustands kontrahiert ist.

18. Expandierbares ringförmiges Lager (23) nach Anspruch 16 oder 17, bei dem die Antriebseinrichtungen (31) zwei Flansche (25) aufweisen, die entlang einer zentralen Welle (26) beweglich sind, die sich entlang der geometrischen Achse (X-X) des expandierbaren ringförmigen Lagers (23) erstreckt, und die operativ mit den Druckringen (28) durch die kinematischen Synchronisierungselemente (32) verbunden sind.

19. Expandierbares ringförmiges Lager (23) nach Anspruch 16, bei dem in dem Ruhezustand die Druckringe (28) winkelmäßig zu der geometrischen Achse (X-X) hin gedreht werden.

20. Expandierbares ringförmiges Lager (23) nach Anspruch 16, bei dem jeder Druckring (28) erste und zweite Drucksektoren (29, 30) aufweist, die umfänglich in einer abwechselnden Folge verteilt sind, wobei die zweiten Drucksektoren (30) jeweils zwischen zwei der ersten Drucksektoren (29) in dem Arbeitszustand einsetzbar sind.

21. Expandierbares ringförmiges Lager (23) nach Anspruch 16, bei dem die kinematischen Synchronisierungselemente (32) für jeden Druckring (28) wenigstens ein Lagerelement (36) aufweisen, welches drehbar durch die zentrale Welle (28) getragen wird und axial bezüglich der letzteren befestigt ist, und wobei sie wenigstens einen der ersten und zweiten Drucksektoren (29, 30) drehbar um eine Drehachse (Y) tangential zu einem Umfang tragen, der konzentrisch mit der geometrischen Achse (X-X) des expandierbaren ringförmigen Lagers (23) ist.

22. Expandierbares ringförmiges Lager (23) nach Anspruch 18, bei dem die Aufblaseinrichtungen wenigstens einen Zuführkanal (27) aufweisen, der sich entlang der zentralen Welle (26) erstreckt und der wenigstens bei einer Verbindungsöffnung (27a) endet, die sich radial in den expandierbaren Balg (24) hin öffnet.

23. Vorrichtung zum Herstellen von Reifen mit:
- wenigstens einem expandierbaren ringförmigen Lager (23),
- Einrichtungen zum In-Eingriff-Bringen des unbearbeiteten Reifens (2) auf dem wenigstens einen expandierbaren ringförmigen Lager (23),
- Einrichtungen zum Einführen des unbearbeiteten Reifens (2) und des expandierbaren ringförmigen Lagers (23) in eine Vulkanisierungsform (52),
- Einrichtungen zum Formen und Vulkanisieren des unbearbeiteten Reifens (2),
- Einrichtungen zum Entfernen des expandierbaren ringförmigen Lagers (23) von dem Reifen (2),
wobei das expandierbare ringförmige Lager gemäß einem der Ansprüche 16 bis 22 gefertigt ist.

24. Vorrichtung nach dem vorhergehenden Anspruch, ferner mit
- wenigsten einem starren ringförmigen Lager (10), das außerhalb einer Gestaltungsoberfläche (10a) eine Ausgestaltung aufweist, die der inneren Ausgestaltung des aufgebauten unbearbeiteten Reifens (2) entspricht,
- Einrichtungen zum Aufbauen des Reifens (2) auf dem starren ringförmigen Lager (10),
- Einrichtungen zum Entfernen des starren ringförmigen Lagers (10) von dem Reifen.

## Revendications

1. Procédé pour fabriquer des pneus pour roues de véhicule, comportant les étapes consistant à :
- engagement d'un pneu cru (2) sur un support toroïdal expansible (23) comportant une vessie expansible (24) ayant des bords circonférentiels (24a) concentriques à un axe géométrique (X-X) du support toroïdal expansible (23) et axialement espacés entre eux, et une paire de bagues de pression (28) fonctionnant en des positions axialement opposées sur la vessie expansible (24), et chacune comportant des secteurs de pression (29, 30) répartis circonférentiellement dans une séquence alternée autour dudit axe géométrique (X-X) ;
- introduction du pneu cru (2) et du support toroïdal expansible (23) dans un moule de vulcanisation (52) ;
- moulage et vulcanisation du pneu cru (2) ;
- retrait du support toroïdal expansible (23) du pneu (2) ;
dans lequel au moins l'une desdites étapes d'engagement et de retrait comporte une étape de déplacement pour décaler chaque bague de pression (28) entre un état de travail dans lequel les secteurs de pression (29, 30) sont alignés circonférentiellement entre eux pour définir une paroi de butée sensiblement continue (28a) s'étendant radialement à l'écart de l'axe géométrique (X-X), et un état de repos dans lequel les secteurs de pression (29, 30) sont déplacés à proximité de l'axe géométrique (X-X) pour déterminer une contraction radiale de la bague de pression (28) ;
dans lequel les bagues de pression (28) sont mutuellement contraintes pour un déplacement simultané de manière mutuellement symétrique pendant l'étape de déplacement.

2. Procédé selon la revendication précédente, dans lequel avant l'étape d'engagement sont effectuées les étapes suivantes :
- construction du pneu (2) sur un support toroïdal rigide (10) ayant à l'extérieur une surface de formage (10a) avec une conformation correspondant à une conformation intérieure du pneu cru (2) construit ;
- retirer le support toroïdal rigide (10) du pneu (2).

3. Procédé selon l'une ou plusieurs des revendications précédentes, dans lequel l'engagement du pneu (2) sur le support toroïdal expansible (23) comporte les étapes consistant à :
- introduction du support toroïdal expansible (23) coaxialement dans le pneu (2) ;
- effectuer ladite étape de déplacement pour décaler les bagues de pression (28) jusqu'à l'état de travail ;
- expansion de la vessie expansible (24) vers un état de travail dans lequel la vessie se conforme sensiblement à la forme de la configuration intérieure du pneu (2), à partir d'un état de repos dans lequel ladite vessie expansible (24) est contractée radialement par rapport à l'état de travail.

4. Procédé selon la revendication précédente, dans lequel le déplacement des bagues de pression (28) vers l'état de travail commence avant l'expansion de la vessie expansible (24).

5. Procédé selon l'une ou plusieurs des revendications précédentes, dans lequel à l'état de repos les bagues de pression (28) sont tournées angulairement vers ledit axe géométrique (X-X).

6. Procédé selon l'une ou plusieurs des revendications précédentes, dans lequel chaque bague de pression (28) comporte des premier et deuxième secteurs de pression (29, 30) répartis circonférentiellement, le déplacement de chaque bague de pression (28) vers l'état de travail comportant l'étape de positionnement des premiers secteurs de pression (29) à l'état de travail, et à l'insertion de chacun des deuxièmes secteurs de pression (30) entre deux desdits premiers secteurs de pression (29).

7. Procédé selon l'une au moins des revendications précédentes, dans lequel le déplacement des bagues de pression (28) entre l'état de travail et l'état de repos est entraîné par translation axiale d'une paire de flasques (25) fonctionnellement reliés aux dites bagues de pression (28) par des éléments de synchronisation cinématique (32) mobiles le long d'une tige centrale (26) s'étendant sur l'axe géométrique (X-X) du support toroïdal expansible (23).

8. Procédé selon la revendication précédente, dans lequel la translation axiale des flasques (25) est réalisée par rotation de la tige centrale (26), à travers un filetage à droite (33a) et un filetage à gauche (33b) formés le long de la tige centrale (26) et venant fonctionenellement en prise avec chacune desdits flasques (25).

9. Procédé selon la revendication 6 et l'une au moins des revendications 7 et 8, dans lequel le déplacement des premiers secteurs de pression (29, 30) de chaque bague de pression (28) commence lorsque la flasque (25) respective dépasse une première position de référence le long de la tige centrale (26), tandis que le déplacement des deuxièmes secteurs de pression (29, 30) commence lorsque la flasque (25) atteint une deuxième position de référence qui est axialement espacée de la première position de référence.

10. Procédé selon une ou plusieurs des revendications 6 à 9, comportant en outre l'étape consistant à translater mutuellement les bords circonférentiels (24b) de la vessie expansible (24) dans une direction axiale, simultanément avec le déplacement des secteurs de pression (29, 30) entre l'état de repos et l'état de travail.

11. Procédé selon la revendication précédente, dans lequel les bords circonférentiels (24b) de la vessie expansible (24) sont déplacés axialement à proximité pendant le déplacement des secteurs de pression (29, 30) vers l'état de travail.

12. Procédé selon l'une au moins des revendications 7 à 11, dans lequel l'expansion de la vessie expansible (24) est réalisée par l'admission d'un fluide vers un canal d'alimentation (27) s'étendant le long de la tige centrale (26) et se terminant au moins à une ouverture de raccordement (27a) débouchant radialement dans la vessie expansible (24).

13. Procédé selon l'une au moins des revendications 8 à 12, dans lequel lesdits pas de vis à droite et à gauche (33a, 33b) sont isolés hermétiquement par rapport à la vessie expansible (24) à la suite du déplacement des secteurs de pression (29, 30) vers l'état de travail.

14. Procédé pour la fabrication de pneus pour roues de véhicules, comportant les étapes consistant à :
- construction d'un pneu cru (2) sur un support toroïdal expansible (23) comportant une vessie expansible (24) ayant des bords circonférentiels (24b) concentriques à un axe géométrique (X-X) du support toroïdal expansible (23) et axialement espacés entre eux, et une paire de bagues de pression (28) fonctionnant en des positions axialement opposées sur la vessie expansible (24), et comportant chacune des secteurs de pression (29, 30) répartis circonférentiellement dans une séquence alternée autour dudit axe géométrique (X-X) ;
- introduction du pneu cru (2) et du support toroïdal expansible (23) dans un moule de vulcanisation (52) ;
- moulage et vulcanisation du pneu cru (2) ;
- retrait du support toroïdal expansible (23) du pneu (2) ;
dans lequel ladite étape de retrait comporte une étape de déplacement pour décaler chaque bague de pression (28) entre un état de travail dans lequel les secteurs de pression (29, 30) sont alignés circonférentiellement entre eux pour définir une paroi de butée sensiblement continue (28a) s'étendant radialement à l'écart de l'axe géométrique (X-X), et un état de repos dans lequel les secteurs de pression (29, 30) sont disposés à proximité de l'axe géométrique (X-X) pour déterminer une contraction radiale de la bague de pression (28) ; dans lequel les bagues de pression (28) sont mutuellement contraintes pour un déplacement simultané d'une manière mutuellement symétrique pendant l'étape de déplacement.

15. Procédé selon la revendication 14, dans lequel l'étape de construction est réalisée par la formation des composants du pneu (2) en cours de traitement directement sur le support toroïdal expansible (23), qui dans l'état de travail est pourvu de ladite vessie expansible (24) se conformant sensiblement à la forme de la conformation intérieure du pneu (2).

16. Support toroïdal expansible (23) comportant une vessie-expansible (24) ayant des bords circonférentiels (24b) concentriques à un axe géométrique (X-X) du support toroïdal expansible (23) et espacés axialement l'un de l'autre, et une paire de bagues de pression (28) fonctionnant en des positions axialement opposées sur la vessie expansible (24), et comportant chacun des secteurs de pression (29, 30) répartis circonférentiellement autour dudit axe géométrique (X-X) ;
dans lequel ledit support toroïdal expansible (23) comporte en outre :
- des dispositifs d'entraînement (31) agissant sur les bagues de pression (28) pour les translater sélectivement entre un état de travail dans lequel les secteurs de pression (29, 30) de chaque bague de pression (28) sont circonférentiellement en alignement entre eux pour définir une paroi de butée sensiblement continue (28a) s'étendant radialement à l'écart de l'axe géométrique (X-X), et un état de repos dans lequel les secteurs de pression (29, 30) sont déplacés à proximité de l'axe géométrique (X-X) pour déterminer une contraction radiale de la bague de pression (28) ;
- des élément de synchronisation cinématique (32) étant fonctionnellement associés à des dispositifs d'entraînement (31) pour que les bagues de pression (28) soient mutuellement contraintes mécaniquement de manière leur à imposer un déplacement simultané et mutuellement symétrique entre un état de repos et un état de travail.

17. Support toroïdal expansible (23) selon la revendication 16, dans lequel la vessie expansible (24), lorsqu'elle est expansée, est dans un état de travail dans lequel elle se conforme sensiblement à la forme de la conformation intérieure du pneu (2), tandis que dans un état de repos ladite vessie expansible (24) est contractée radialement par rapport à l'état de travail.

18. Support toroïdal expansible (23) selon la revendication 16 ou 17, dans lequel les dispositifs d'entraînement (31) comportent deux flasques (25) qui sont mobiles le long d'une tige centrale (26) s'étendant sur l'axe géométrique (X-X) du support toroïdal expansible (23), et sont fonctionnellement interconnectés avec les bagues de pression (28) par lesdits éléments de synchronisation cinématique (32).

19. Support toroïdal expansible (23) selon la revendication 16, dans lequel à l'état de repos les bagues de pression (28) sont tournées angulairement vers ledit axe géométrique (X-X).

20. Support toroïdal expansible (23) selon la revendication 16, dans lequel chaque bague de pression (28) comporte des premier et deuxième secteurs de pression (29, 30) qui sont répartis circonférentiellement dans une séquence alternée, les deuxièmes secteurs de pression (30) étant chacun insérables entre deux desdits premiers secteurs de pression (29) dans l'état de travail.

21. Support toroïdal expansible (23) selon la revendication 16, dans lequel lesdits éléments de synchronisation cinématique (32) pour chaque bague de pression (28) comportent au moins un élément de support (36) porté en rotation par la tige centrale (26) et axialement fixé par rapport à celle-ci, et portant au moins l'un desdits premier et deuxième secteurs de pression (29, 30) de manière rotative autour d'un axe d'articulation (Y) tangent à une circonférence concentrique à l'axe géométrique (X-X) du support toroïdal expansible (23).

22. Support toroïdal expansible (23) selon la revendication 18, dans lequel lesdits dispositifs de gonflage comportent au moins un canal d'alimentation (27) s'étendant le long de la tige centrale (26) et se terminant en au moins une ouverture de raccordement (27a) débouchant radialement dans la vessie expansible (24).

23. Appareil pour la fabrication de pneus comportant :
- au moins un support toroïdal expansible (23) ;
- des dispositifs pour engager le pneu cru (2) sur ledit au moins un support toroïdal expansible (23) ;
- des dispositifs pour introduire le pneu cru (2) et le support toroïdal expansible (23) dans un moule de vulcanisation (52) ;
- des dispositifs pour mouler et vulcaniser le pneu cru (2) ;
- des dispositifs pour retirer le support toroïdal expansible (23) du pneu (2) ;
dans lequel ledit support toroïdal expansible (23) est réalisé selon l'une quelconque des revendications 16 à 22.

24. Appareil selon la revendication précédente, comportant en outre :
- au moins un support toroïdal rigide (10) ayant à l'extérieur une surface de formage (10a) d'une conformation correspondant à la conformation intérieure du pneu cru (2) construit ;
- des dispositifs pour la construction du pneu (2) sur ledit support toroïdal rigide (10) ;
- des dispositifs pour retirer le support toroïdal rigide (10) du pneu (2).
